# EUROPEAN PATENT SPECIFICATION

(11) **EP 4 483 622 B1**
(45) Date of publication and mention of the grant of the patent: **02.09.2026**
(21) Application number: 22962340.0
(22) Date of filing: 18.10.2022
(51) Int. Cl.: G01S 5/00, G01S 5/02, H04L 5/00, H04W 64/00, H04W 4/80, H04W 40/22, H04W 76/14, H04W 76/19, H04W 92/18

(54) **POSITIONING**
POSITIONIERUNG
POSITIONNEMENT

(43) Date of publication of application: 01.01.2025
(73) Proprietor: Nokia Technologies Oy, 02610 Espoo (FI)
(72) Inventor: MICHALOPOULOS, Diomidis, 81541 Munich (DE); SAHIN, Taylan, 81539 Munich (DE); ASHRAF, Muhammad Ikram, 02770 Espoo (FI); LIU, Yong, Shanghai 200134 (CN); SÄILY, Mikko, 07150 Laukkoski (FI); KESHAVAMURTHY, Prajwal, 81241 Munich (DE)
(74) Representative: Kolster Oy Ab
(86) International application number: PCT/CN2022/126019
(87) International publication number: WO 2024/082149

(56) References cited:
- WO-A1-2021/120077
- WO-A1-2021/139771
- CN-A- 113 544 981
- CN-A- 113 784 276
- CMCC: "Considerations on Sidelink positioning", vol. RAN WG2, no. electronic; 20221010 - 20221019, 30 September 2022 (2022-09-30), XP052263490, Retrieved from the Internet <URL:https://ftp.3gpp.org/tsg_ran/WG2_RL2/TSGR2_119bis-e/Docs/R2-2210167.zip R2-2210167 Considerations on Sidelink positioning.doc> [retrieved on 20220930]
- NOKIA ET AL: "Support of idle mode mobility for remote-UE in SL U2N relay", vol. RAN WG2, no. Electronic; 20220117 - 20220125, 11 January 2022 (2022-01-11), XP052094561, Retrieved from the Internet <URL:https://ftp.3gpp.org/tsg_ran/WG2_RL2/TSGR2_116bis-e/Docs/R2-2201462.zip R2-2201462 Support of idle mode mobility for remote-UE in SL U2N relay.docx> [retrieved on 20220111]
- ERICSSON: "SL positioning", vol. RAN WG2, no. e-Meeting; 20220817 - 20220829, 10 August 2022 (2022-08-10), XP052261394, Retrieved from the Internet <URL:https://ftp.3gpp.org/tsg_ran/WG2_RL2/TSGR2_119-e/Docs/R2-2208080.zip R2-2208080 SL.docx> [retrieved on 20220810]

## Description

### FIELD

Embodiments of the present disclosure generally relate to the field of telecommunication and in particular, to positioning an out-of-coverage device.

### BACKGROUND

A New radio (NR) system provides positioning support. In order to perform the positioning of a target device, the target device is first configured by the network to measure a set of positioning reference signals (PRS). The target device measures the PRS based on the configuration. The target device may report measurements to the network. Then, the network processes the measurements and determines the location estimate of the target device. The network then provides the location estimate of the target device to an entity requesting such location information. Alternatively, the target device may calculate its own location estimate based on its measurements. In case of mobile-terminated location request (MT-LR), the positioning request may be sent from a location client to a location server. In case of mobile-originated location request (MO-LR), the positioning request may be directly initiated by the target device to the positioning management system through the air interface.

The above process requires that the target device needs to be in-coverage of the network since there is a signaling between the network and the target device involved.

The document 3GPP R2-2208080: "SL postioning", by Ericsson, 3GPP TSG-RAN WG2 Meeting #119-e, August 17th - 29th 2022, discloses that sidelink postioning messages may be exchanged between a remote UE and the network via a UE-to-Network Relay.

WO 2021/139 771 A1 discloses that a base station may transmit discovery information for establishing a sidelink connection between a remote UE and a relay UE.

### SUMMARY

The invention is defined by the appended claims and provides a solution for positioning.

As defined by claim 1, the invention provides a first terminal device, comprising: at least one processor; and at least one memory storing instructions that, when executed by the at least one processor, cause the first terminal device at least to: receive, from a base station, first configuration information for maintaining or establishing a positioning session associated with the first terminal device, wherein the first configuration information is received when the first terminal device is in an in-coverage status with respect to the base station; transmit, to a second terminal device, a request for establishing a relay link between the first terminal device and the second terminal device for positioning assistance based on the first configuration information; perform, based on the first configuration information and with the positioning assistance of the second terminal device, positioning of the first terminal device while being in an out-of-coverage status with respect to the base station; and transmit a positioning measurement report to the base station via the second terminal device. Preferred embodiments of the first terminal device of claim 1 are defined by claims 2 to 4.

As defined by claim 5, the invention provides a base station, comprising: at least one processor; and at least one memory storing instructions that, when executed by the at least one processor, cause the base station at least to: transmit, to a first terminal device, first configuration information for maintaining or establishing a positioning session associated with the first terminal device which is to be in an out-of-coverage status with respect to the base station, wherein the first configuration information is transmitted when the first terminal device is in an in-coverage status with respect to the base station; transmit, to a second terminal device, a second configuration information for establishing a relay link between the first terminal device and the second terminal device for positioning assistance for the first terminal device which is in the out-of-coverage status with respect to the base station; and receive, from the first terminal device via the second terminal device, a positioning measurement report associated with the first terminal device.

As defined by claim 6, the invention provides a method performed by a first terminal device, the method comprising: receiving, at the first terminal device from a base station, first configuration information for maintaining or establishing a positioning session associated with the first terminal device, wherein the first configuration information is received when the first terminal device is in an in-coverage status with respect to the base station; transmitting, to a second terminal device, a request for establishing a relay link between the first terminal device and the second terminal device for positioning assistance based on the first configuration information; performing, based on the first configuration information and with the positioning assistance of the second terminal device, positioning of the first terminal device while being in an out-of-coverage status with respect to the base station; transmitting a positioning measurement report to the base station via the second terminal device. Preferred embodiments of the method of claim 6 are defined by claims 7 and 8.

As defined by claim 9, the invention provides a method performed by a base station, the method comprising: transmitting, to a first terminal device, first configuration information for maintaining or establishing a positioning session associated with the first terminal device which is to be in an out-of-coverage status with respect to the base station, wherein the first configuration information is transmitted when the first terminal device is in an in-coverage status with respect to the base station; transmitting, to the second terminal device, second configuration information for establishing a relay link between the first terminal device and the second terminal device for positioning assistance for the first terminal device which is in an out-of-coverage status with respect to the base station; and receiving, from the first terminal device via a second terminal device, a positioning measurement report associated with the first terminal device.

As defined by claim 10, the invention provides a computer program including instructions to cause an apparatus to perform the methods of any one of claims 6 to 9.

As defined by claim 11, the invention provides a non-transitory computer readable medium comprising the computer program of claim 10.

### BRIEF DESCRIPTION OF THE DRAWINGS

Some example embodiments will now be described with reference to the accompanying drawings, where:
Fig. 1 illustrates an example communication network in which embodiments of the present disclosure may be implemented;
Fig. 2 illustrates a signaling chart illustrating a process for positioning in accordance with some example embodiments of the present disclosure;
Fig. 3 illustrates a signaling chart illustrating a process for positioning in accordance with some other example embodiments of the present disclosure;
Fig. 4 illustrates a signaling chart illustrating a process for positioning in accordance with still other example embodiments of the present disclosure;
Fig. 5 illustrates a signaling chart illustrating a process for positioning in accordance with yet other example embodiments of the present disclosure;
Fig. 6 illustrates a flowchart of a method implemented at a first device in accordance with some example embodiments of the present disclosure;
Fig. 7 illustrates a flowchart of a method implemented at a fourth device in accordance with other example embodiments of the present disclosure;
Fig. 8 illustrates a flowchart of a method implemented at a second device in accordance with other example embodiments of the present disclosure;
Fig. 9 illustrates a simplified block diagram of an apparatus that is suitable for implementing embodiments of the present disclosure; and
Fig. 10 illustrates an example of a computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure.

In the following description, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as fifth generation (5G) systems, Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) new radio (NR) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR Next Generation NodeB (gNB), a Remote Radio Unit (RRU), a radio header (RH), a remote radio head (RRH), a relay, a low power node such as a femto, a pico, and so forth, depending on the applied terminology and technology. An RAN split architecture comprises a gNB-CU (Centralized unit, hosting RRC, SDAP and PDCP) controlling a plurality of gNB-DUs (Distributed unit, hosting RLC, MAC and PHY).

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "user device", "communication device", "terminal", "user equipment" and "UE" may be used interchangeably.

Although functionalities described herein can be performed, in various example embodiments, in a fixed and/or a wireless network node may, in other example embodiments, functionalities may be implemented in a user equipment (such as a cell phone or tablet computer or laptop computer or desktop computer or mobile IoT device or fixed IoT device). This user equipment can, for example, be furnished with corresponding capabilities as described in connection with the fixed and/or the wireless network node(s), as appropriate. The user equipment may be the user equipment and/or or a control device, such as a chipset or processor, configured to control the user equipment when installed therein. Examples of such functionalities include the bootstrapping server function and/or the home subscriber server, which may be implemented in the user equipment apparatus by providing the user equipment with software configured to cause the user equipment to perform from the point of view of these functions/nodes.

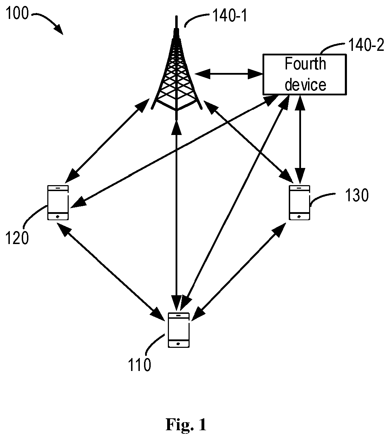

Fig. 1 shows an example communication network 100 in which embodiments of the present disclosure can be implemented. The network 100 may comprise a first device 110, a second device 120, a third device 130 as well as fourth devices 140-1 and 140-2 that can communicate with each other. Hereinafter, for brevity, the fourth devices 140-1 and 140-2 may be collectively referred to as fourth devices 140 or individually referred to as a fourth device 140.

In some embodiments, each of the first device 110, the second device 120, and the third device 130 may be implemented as a terminal device in a radio access network. In such embodiments, the fourth device 140-1 may be implemented as a network device in the radio access network, and the fourth device 140-2 may be implemented as a network device in the radio access network or in a core network.

For example, the fourth device 140-1 may be implemented as a gNB (also referred to a base station) and the fourth device 140-2 may be implemented as a Location Management Function (LMF) entity. The LMF entity may be implemented in the radio access network or in the core network.

In other embodiments, at least one of the fourth devices 140-1 and/or 140-2 may be implemented as a server UE.

In some embodiments, each of the first device 110, the second device 120, and the third device 130 may communicate with each other via a sidelink therebetween.

It is to be understood that the number of fourth devices and devices is only for the purpose of illustration without suggesting any limitations. The network 100 may include any suitable number of fourth devices and devices adapted for implementing embodiments of the present disclosure. Although not shown, it would be appreciated that one or more devices may be served by the fourth device 140. In addition, it would be appreciated that there may be more neighbor fourth devices near the first device.

Communications in the communication network 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

In some embodiments, in order to perform positioning of the first device 110, a positioning session may be established between the first device 110 and the fourth device 140-2. In addition, the first device 110 may receive downlink Positioning Reference Signals (PRS) from the fourth device 140-1.

In some embodiments, for example, due to mobility, the first device 110 may experience an unexpected coverage interruption or an expected coverage interruption. In other words, status of the first device 110 may be changed from an in-coverage status with respect to the fourth device 140 to an out-of-coverage status with respect to the fourth device 140.

For example, in a first scenario, the first device 110 may experience unexpected radio link failure (RLF) or other link interruptions (e.g., malfunctioning of its serving fourth device 140-1) during the positioning session. In case of NR, for example, the RLF causes may be at least one of following: (1) failure at RF or physical layer due to higher layer frequency offset or time offset, poor carrier to interference conditions on the channels exchanged between the first device 110 and the fourth device 140-1; or (2) RLF during handover

Typically, there are two phases when the first device 110 detected as RLF. The first device 110 enters in a first phase as soon as it detected radio issues (e.g., low Reference Signal Received Power (RSRP) or Reference Signal Received Quality (RSRQ)). The first device 110 enters into a second phase due to handover failure or detection of RLF. The first device 110 enters into an RRC_IDLE state and UE-based mobility, i.e., cell selection and reselection process.

In a second scenario, the first device 110 may wake up from idle or inactive state in an area outside coverage of the fourth device 140-1 but wants to locate itself.

In a third scenario, the fourth device 140 may be aware of possible or expected coverage gaps, e.g., along the future trajectory of the first device 110. Examples of such expected coverage gaps are, e.g., RLF or Beam failure (BF) during the positioning session caused by a forecasted connectivity problem.

In the above scenarios, it is not possible to conduct or continue the positioning session according to current specifications.

In order to solve the above and other potential problems, embodiments of the present disclosure provide a solution for positioning. The solution considers the opportunity of using the downlink PRS that are still receivable by a first device under coverage interruptions for user plane communication or control plane signaling. In the solution, the first device receives, from a fourth device, first configuration information for maintaining or establishing a positioning session associated with the first device. In turn, the first device performs, based on the first configuration information and with positioning assistance of a second device, positioning of the first device while being in an out-of-coverage status with respect to the fourth device. The solution may ensure positioning session continuity or establishment of a positioning session for the first device experiencing coverage interruptions.

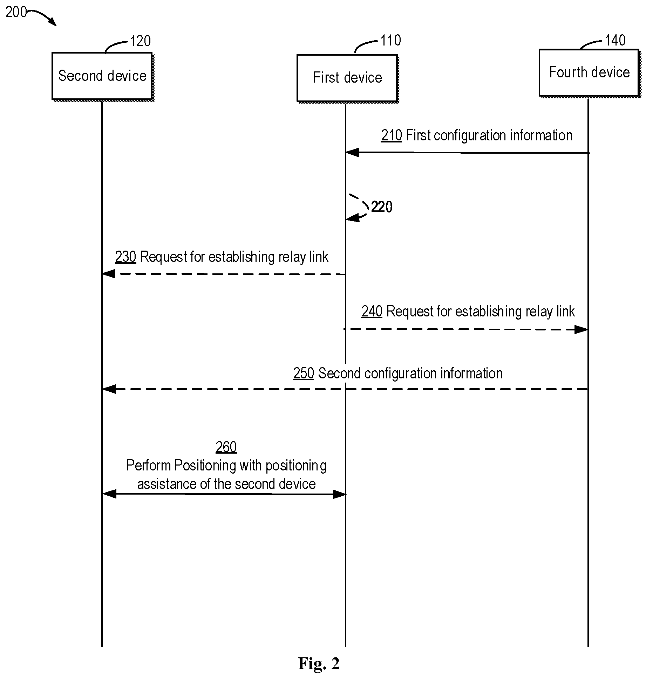

Hereinafter, some embodiments of the present disclosure will be described with reference to Figs. 2 to 9.

Fig. 2 illustrates a signaling chart illustrating a process 200 for positioning in accordance with some example embodiments of the present disclosure. For the purpose of discussion, the process 200 will be described with reference to Fig. 1. The process 200 may involve the first device 110, the second device 120 and the fourth device 140 in Fig. 1.

As shown in Fig. 2, the fourth device 140 transmits 210, to the first device 110, first configuration information for maintaining or establishing a positioning session associated with the first device 110 which is in an out-of-coverage status with respect to the fourth device 140. For example, the fourth device 140-1 (such as a gNB) may transmit the first configuration information to the first device 110. Alternatively, the fourth device 140-2 (such as an LMF) may transmit the first configuration information to the first device 110.

In some embodiments, when the first device 110 is in an in-coverage status, the fourth device 140 may transmit the first configuration information to the first device 110.

Upon receiving the first configuration information, based on the first configuration information and with positioning assistance of the second device 120, the first device 110 performs 260 positioning of the first device 110 while being in an out-of-coverage status with respect to the fourth device 140.

The process 200 may ensure positioning session continuity or establishment of a positioning session for the first device experiencing coverage interruptions.

In some embodiments, the second device 120 may be in an in-coverage status with respect to the fourth device 140.

In some embodiments, for the positioning assistance, a relay link is established between the first device 110 and the second device 120 and is used for the positioning assistance for the first device 110.

In some embodiments, establishment of the relay link may be triggered upon a request from the first device 110.

In some embodiments, the relay link between the first device 110 and the second device 120 may be a sidelink.

In embodiments where the first device 110 wakes up in the out-of-coverage status, the second device 120 may request, via the established relay link, on-demand PRS from the fourth device 140 on behalf of the first device 110.

In some embodiments, upon receiving the first configuration information, the first device 110 may determine 220 whether it is in the out-of-coverage status. For example, if the first device 110 is experiencing unexpected RLF or other link interruptions (e.g., malfunctioning of its serving fourth device 140-1), the first device 110 may determine it is in the out-of-coverage status. For another example, if the first device 110 wakes up from idle or inactive state in an area outside coverage of the fourth device 140-1, the first device 110 may determine it is in the out-of-coverage status.

If the first device 110 is in the out-of-coverage status, the first device 110 may transmit 230, based on the first configuration information, a request for establishing the relay link to the second device 120.

In some embodiments, the fourth device 140 may transmit 250, to the second device 120, second configuration information for establishing the relay link.

Upon receiving the second configuration information for establishing the relay link, the second device 120 may establish the relay link based on the second configuration information.

In some embodiments, the first device 110 may transmit 240, based on the first configuration information, the request for establishing the relay link to the fourth device 140. Upon receiving the request for establishing the relay link from the first device 110, the fourth device 140 may transmit, to the second device 120, the second configuration information for establishing the relay link.

In some embodiments, the first configuration information may comprise parameters that define actions of the first device 110 with positioning session when the first device 110 experiences a coverage interruption.

In some embodiments, the first configuration information may comprise at least one of the following:
- positioning assistance data,
- at least one threshold for triggering a request for establishing the relay link from the first device 110,
- a second time threshold for releasing the relay link, or
- at least one threshold until which the positioning assistance data is utilized by the first device 110.

In some embodiments, the first device 110 may transmit the request for establishing the relay link based on determining at least one of the following:
- a time duration after an RLF is declared is above a first time threshold,
- a distance between the first device 110 and the fourth device 140 or a fifth device after the RLF is declared is below a first distance threshold,
- received powers of positioning reference signals (PRS) are above a first power threshold, or
- the first number of transmission reception points (TRPs) is above a first number threshold.

In some embodiments, the TRPs may belong to the fourth device 140-1.

In some embodiments, the first device 110 may transmit the request for establishing the relay link to the second device 120 via a discover message.

In some embodiments, the first time threshold may be associated with a T310 timer. In such embodiments, if RLF occurs because of T310 timer expiry, the first device 110 may use such indication of T310 timer expiry to initiate the discover message for nearby devices.

In some embodiments, the first time threshold may be associated with a time alignment timer associated with a random access procedure. In such embodiments, if RLF occurs due to random access problem (e.g., the first device 110 is in connected mode but not uplink synchronized), that is, time alignment timer expired before RRC Inactivity timer, the first device 110 may initiate the discover message on the expiration of time alignment timer.

In some embodiments, the first time threshold may be associated with a counter of beam failure instance (cBFI). In such embodiments, if the cBFI exceeds a threshold, the first device 110 may initiate the discovery message.

In some embodiments, the at least one threshold for triggering the request for establishing the relay link from the first device 110 may comprise at least one of the following:
- the first time threshold,
- the first distance threshold,
- the first power threshold, or
- the first number threshold.

In some embodiments, the first device 110 may determine whether a time duration during which the positioning session is maintained with the positioning assistance of the second device 120 is above a second time threshold. If the time duration is above the second time threshold, the first device 110 may release the relay link. In some embodiments, the first configuration information may comprise the second time threshold. The second time threshold ensures that the first device 110 limits the time it keeps its positioning session via the relay link for positioning assistance, aiming at a non-excessive use of relay link resources.

In some embodiments, in order for the positioning assistance, the second device 120 establishes the relay link based on the second configuration information.

In some embodiments, in order for the positioning assistance, the second device 120 may forward a positioning measurement report associated with the first device 110 from the first device 110 to the fourth device 140. Accordingly, the fourth device 140 receives the positioning measurement report from the first device 110 via the second device 120.

In some embodiments, if the first device 110 determines a time duration during which the positioning assistance data is utilized is below a third time threshold, the first device 110 may perform the positioning by utilizing the positioning assistance data. The positioning assistance data may comprise PRS configurations.

Alternatively, or additionally, in some embodiments, if the first device 110 determines a distance between the first device 110 and the second device is below a second distance threshold, the first device 110 may perform the positioning by utilizing the positioning assistance data.

In some embodiments, if the first device 110 determines the time duration during which the positioning assistance data is utilized is above the third time threshold, the first device 110 may transmit, to the second device 120, a request for update of the positioning assistance data. In turn, the first device 110 may receive updated positioning assistance data from the second device 120.

Alternatively, or additionally, in some embodiments, if the first device 110 determines the distance between the first device 110 and the second device is above the second distance threshold, the first device 110 may transmit, to the second device 120, the request for update of the positioning assistance data. In turn, the first device 110 may receive the updated positioning assistance data from the second device 120.

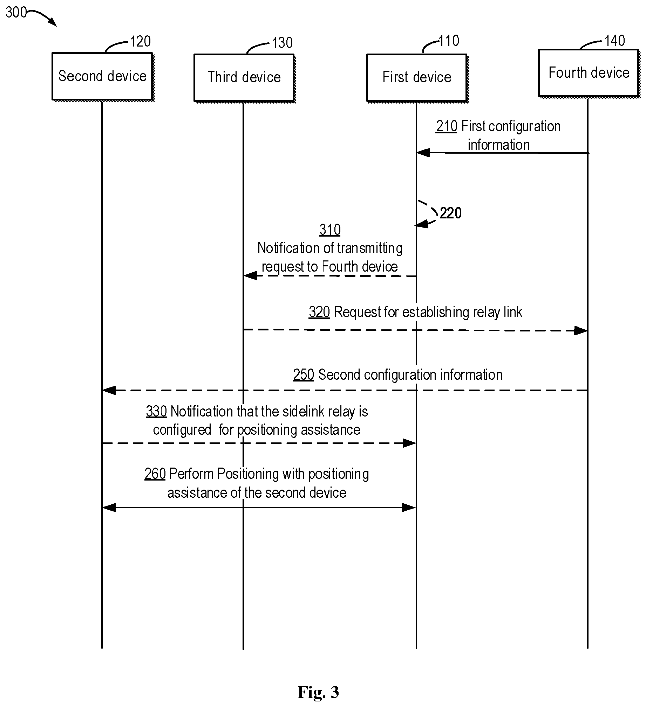

In some embodiments, the first device 110 may delegate another device (for example, the third device 130) which is in an in-coverage status to request establishment of the relay link for the positioning assistance on behalf of the first device 110. This will be described with reference to Fig. 3.

Fig. 3 illustrates a signaling chart illustrating a process 300 for positioning in accordance with some other example embodiments of the present disclosure. For the purpose of discussion, the process 300 will be described with reference to Fig. 1. The process 300 may involve the first device 110, the second device 120, the third device 130 and the fourth device 140 in Fig. 1.

In the process 300, the assignment of the relay link for positioning assistance is carried out by the fourth device 140.

The actions 210, 220, 250 and 260 in the process 300 are similar to those in the process 200. For brevity, details of these actions are omitted. The process 300 is different from the process 200 in actions 310, 320 and 330.

Specifically, if the first device 110 determines 220 that it is in the out-of-coverage status, the first device 110 may transmit 310, to the third device 130 that is in an in-coverage status, a notification of transmitting the request for establishing the relay link to the fourth device 140.

In some embodiments, if the first device 110 determines that it is in the out-of-coverage status, the first device 110 may transmit 310 the notification to the third device 130 based on determining at least one of the following:
- a time duration after an RLF is declared is above the first time threshold,
- a distance between the first device 110 and the fourth device 140 or a fifth device after the RLF is declared is below the first distance threshold,
- received powers of PRS are above the first power threshold, or
- the first number of TRPs is above the first number threshold.

In some embodiments, the first device 110 may transmit, to the third device 130, the notification of transmitting the request via a discover message.

Upon receiving the notification, the third device 130 transmits 320 the request for establishing the relay link to the fourth device 140.

Upon receiving the notification, the fourth device 140 transmits 250, to the second device 120, the second configuration information for establishing the relay link.

Upon receiving the second configuration information for establishing the relay link, the second device 120 may transmit 330, to the first device 110, a notification that the sidelink relay is configured for the positioning assistance.

Alternatively, in other embodiments, upon transmitting the second configuration information for establishing the relay link, the fourth device 140 may transmit, to the third device 130, the notification that the sidelink relay is configured for the positioning assistance. In turn, the third device 130 may forward the notification to the first device 110.

In other embodiments, the assignment of the relay link for the positioning assistance may be carried out by the third device 130. In such embodiments, the first device 110 may request the third device 130 to establish the relay link.

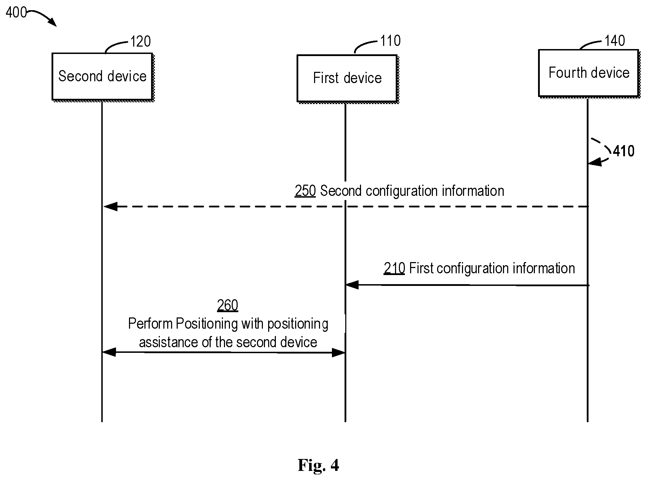

In some embodiments, the fourth device 140 may proactively transmit, to the second device 120, the second configuration information for establishing the relay link. This will be described with reference to Fig. 4.

Fig. 4 illustrates a signaling chart illustrating a process 400 for positioning in accordance with some other example embodiments of the present disclosure. For the purpose of discussion, the process 400 will be described with reference to Fig. 1. The process 400 may involve the first device 110, the second device 120 and the fourth device 140 in Fig. 1.

The actions 210, 250 and 260 in the process 400 are similar to those in the process 200. For brevity, details of these actions are omitted. The process 400 is different from the process 200 in an action 410.

Specifically, the fourth device 140 determines 410 that the first device 110 experiences an expected coverage interruption. In turn, the fourth device 140 proactively transmit 250, to the second device 120, the second configuration information for establishing the relay link.

In some embodiments, the fourth device 140 may select the relay link based on positions of candidate relay devices and expected position of the first device 110.

In the process 400, the first configuration information for maintaining or establishing the positioning session associated with the first device 110 may comprise at least one of the following:
- information about the second device 120 selected by the fourth device 140,
- information about an expected area of low coverage or out of coverage with respect to the fourth device 140, or
- positioning assistance data which is to be used in the expected area.

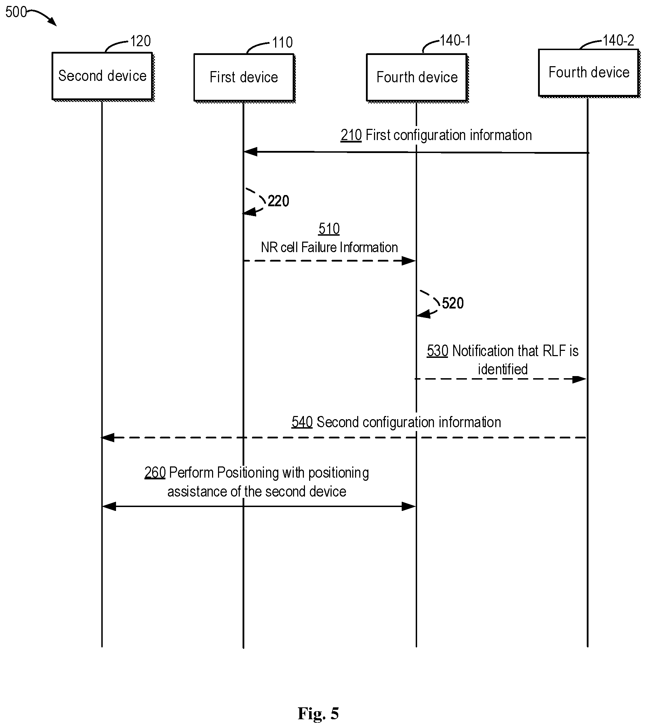

In some embodiments, when the first device 110 experiences an unexpected coverage interruption, the fourth device 140-1 may transmit, to the fourth device 140-2, a notification that an RLF of the first device 110 is identified. This will be described with reference to Fig. 5.

Fig. 5 illustrates a signaling chart illustrating a process 500 for positioning in accordance with still other example embodiments of the present disclosure. For the purpose of discussion, the process 500 will be described with reference to Fig. 1. The process 500 may involve the first device 110, the second device 120, the fourth device 140-1 and the fourth device 140-2 in Fig. 1.

The actions 210, 220 and 260 in the process 500 are similar to those in the process 200. For brevity, details of these actions are omitted. The process 500 is different from the process 200 in actions 510, 520, 530, 540 and 550.

Specifically, if the first device 110 determines 220 that the first device 110 is in the out-of-coverage status, the first device 110 may transmit 510 NR cell Failure Information to the fourth device 140-1 (such as the serving gNB of the first device 110), instead of triggering re-establishment.

Upon detection 520 of the NR cell Failure Information, the fourth device 140-1 transmits 530, to the fourth device 140-2 (such as an LMF), a notification that an RLF of the first device 110 is identified.

Upon receiving the notification, the fourth device 140-2 transmits 540, to the second device 120, the second configuration information for establishing the relay link.

In some embodiments, the fourth device 140 may provide pre-configuration of sidelink positioning to aid Uu positioning (i.e., joint Uu and sidelink positioning) or as a fallback positioning solution (i.e., sidelink standalone positioning) in case of unexpected or expected coverage interruption.

In such embodiments, the positioning assistance data comprises at least one of the following: configuration related to PRS to be transmitted from the fourth device 140, or configuration related to sidelink PRS to be transmitted from sidelink positioning anchors.

In some embodiments, a sidelink positioning anchor may be UE supporting positioning of a target UE (for example, the first device 110), e.g., by transmitting and/or receiving reference signals for positioning, providing positioning-related information and so on over the sidelink interface. The sidelink positioning anchor may or may not have a known location.

In some embodiments, the configuration related to the sidelink PRS comprises at least one of the following:
- identities (ID) of the sidelink positioning anchors,
- a pattern of the sidelink PRS, or
- a resource allocation for the sidelink PRS.

In some embodiments, the first device 110 may perform a joint downlink and sidelink positioning based on the configuration related to the downlink PRS and the configuration related to the sidelink PRS. In such embodiments, the first device 110 may combine measurements from downlink and sidelink anchors for positioning and utilize both such measurements for location estimation.

Alternatively, in some embodiments, the first device 110 may perform a sidelink positioning based on the configuration related to the sidelink PRS.

In some embodiments, the first device 110 may perform the joint downlink and sidelink positioning or perform the sidelink positioning based on determining at least one of the following:
- a time duration after an RLF is declared is above a fourth time threshold,
- a distance between the first device 110 and the second device after the RLF is declared is above a third distance threshold, or
- the number of TRPs transmitting the downlink PRS is above a number threshold.

In some embodiments, the at least one threshold for triggering the request for establishing the relay link from the first device 110 may comprise at least one of the following:
- the fourth time threshold,
- the third distance threshold, or
- the number threshold.

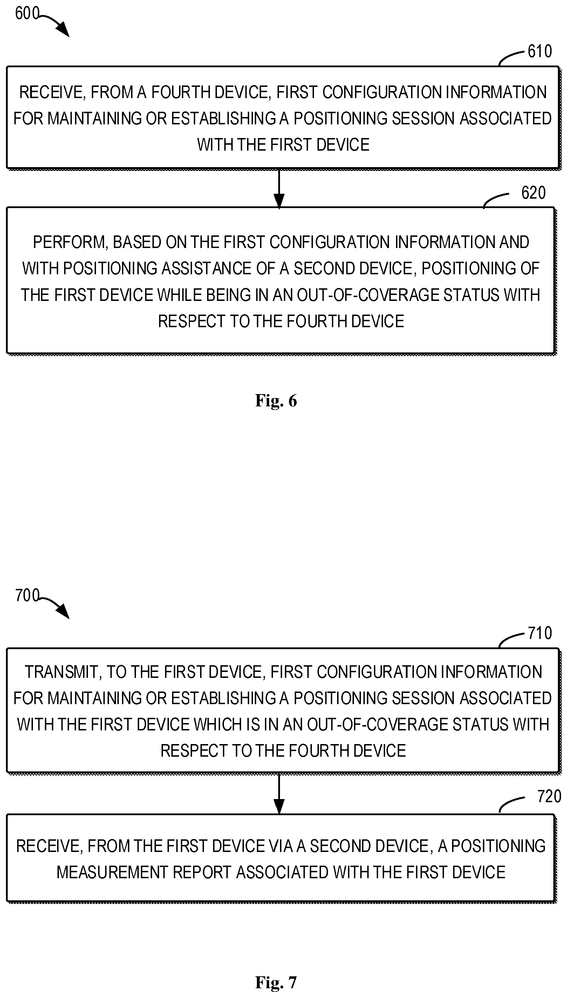

Fig. 6 shows a flowchart of an example method 600 implemented at a first device in accordance with some example embodiments of the present disclosure. For the purpose of discussion, the method 600 will be described from the perspective of the first device 110 with respect to Fig. 1.

At block 610, the first device 110 receives, from a fourth device, first configuration information for maintaining or establishing a positioning session associated with the first device 110.

At block 620, the first device 110 performs, based on the first configuration information and with positioning assistance of a second device, positioning of the first device 110 while being in an out-of-coverage status with respect to the fourth device.

In some embodiments, the method 600 further comprises: transmitting, to the second device, a request for establishing a relay link between the first device and the second device for the positioning assistance based on the first configuration information; or transmitting, to a third device that is in an in-coverage status with respect to the fourth device, a notification of transmitting the request to the fourth device.

In some embodiments, transmitting the request or the notification comprises: transmitting the request or the notification based on determining at least one of the following:
- a time duration after a radio link failure, RLF, is declared is above a first time threshold,
- a distance between the first device and the fourth device or a fifth device after the RLF is declared is below a first distance threshold,
- received powers of positioning reference signals are above a first power threshold, or
- the first number of transmission reception points, TRPs, is above a first number threshold.

In some embodiments, the first time threshold is associated with at least one of the following: a T310 timer, a time alignment timer associated with a random access procedure, or a counter of beam failure instance.

In some embodiments, the first configuration information comprises at least one of the following:
- the first time threshold,
- the first distance threshold,
- the first power threshold,
- the first number threshold, or
- positioning assistance data.

In some embodiments, the method 600 further comprises: in accordance with a determination that a time duration during which the positioning session is maintained with the positioning assistance of the second device is above a second time threshold, releasing the second device.

In some embodiments, the first configuration information comprises the second time threshold.

In some embodiments, performing the positioning comprises: transmitting a positioning measurement report to the fourth device via the second device.

In some embodiments, performing the positioning comprises: performing the positioning by utilizing the positioning assistance data based on determining at least one of the following: a time duration during which the positioning assistance data is utilized is below a third time threshold, or a distance between the first device and the second device is below a second distance threshold.

In some embodiments, the method 600 further comprises: determining at least one of the following: the time duration during which the positioning assistance data is utilized is above the third time threshold, or the distance between the first device and the second device is above the second distance threshold; transmitting, to the second device, a request for update of the positioning assistance data based on the determination; and receiving, from the second device, updated positioning assistance data.

In some embodiments, the positioning assistance data comprises at least one of: configuration related to downlink positioning reference signals, PRS to be transmitted from the fourth device; or configuration related to sidelink PRS to be transmitted from sidelink positioning anchors.

In some embodiments, the configuration related to the sidelink PRS comprises at least one of the following:
- identities of the sidelink positioning anchors,
- a pattern of the sidelink PRS, or
- a resource allocation for the sidelink PRS.

In some embodiments, performing the positioning comprises: performing a joint downlink and sidelink positioning based on the configuration related to the downlink PRS and the configuration related to the sidelink PRS; or performing a sidelink positioning based on the configuration related to the sidelink PRS.

In some embodiments, performing the joint downlink and sidelink positioning or performing the sidelink positioning is based on determining at least one of the following:
- a time duration after a radio link failure, RLF, is declared is above a fourth time threshold,
- a distance between the first device and the second device after the RLF is declared is above a third distance threshold, or
- the number of transmission reception points, TRPs, is above a number threshold, the TRPs transmitting the downlink PRS.

In some embodiments, establishment of the relay link is triggered by the fourth device. In such embodiments, the first configuration information comprises at least one of the following:
- information about the second device selected by the fourth device,
- information about an expected area of low coverage or out-of-coverage of the fourth device, or
- positioning assistance data which is to be used in the expected area.

In some embodiments, the second device is in an in-coverage status with respect to the fourth device.

Fig. 7 shows a flowchart of an example method 700 implemented at a fourth device in accordance with some example embodiments of the present disclosure. For the purpose of discussion, the method 700 will be described from the perspective of the fourth device 140 with respect to Fig. 1.

At block 710, the fourth device 140 transmits, to a first device, first configuration information for maintaining or establishing a positioning session associated with the first device which is in an out-of-coverage status with respect to the fourth device 140.

At block 720, the fourth device 140 receives, from the first device via a second device, a positioning measurement report associated with the first device.

In some embodiments, the method 700 further comprises: transmitting, to the second device, second configuration information for establishing a relay link between the first device and the second device for positioning assistance for the first device which is in an out-of-coverage status with respect to the fourth device.

In some embodiments, transmitting the second configuration information for establishing the relay link is based on determining: the first device experiences an unexpected coverage interruption, or the first device experiences an expected coverage interruption.

In some embodiments, the method 700 further comprises: receiving, from a third device which is in an in-coverage status with respect to the fourth device, a request for establishing the relay link for the positioning assistance. In some embodiments, transmitting the second configuration information comprises transmitting the second configuration information for establishing the relay link based on the request.

In some embodiments, the first configuration information comprises at least one of the following:
- positioning assistance data,
- at least one threshold for triggering a request for establishing a relay link from the first device, the relay link being between the first device and the second device for positioning assistance for the first device which is in an out-of-coverage status with respect to the fourth device,
- a second time threshold for releasing the relay link, or
- at least one threshold until which the positioning assistance data is utilized by the first device.

In some embodiments, the method 700 further comprises: receiving, from the second device, a request for update of the positioning assistance data; and transmitting, to the second device, updated positioning assistance data based on the request.

In some embodiments, the positioning assistance data comprises: configuration related to downlink PRS to be transmitted from the fourth device; and configuration related to sidelink PRS to be transmitted from sidelink positioning anchors.

In some embodiments, the configuration related to the sidelink PRS comprises at least one of the following:
- identities of the sidelink positioning anchors,
- a pattern of the sidelink PRS, or
- a resource allocation for the sidelink PRS.

In some embodiments, establishment of the relay link is triggered by the fourth device. In such embodiments, the first configuration information comprises at least one of the following:
- information about the second device selected by the fourth device,
- information about an expected area of low coverage or out-of-coverage of the fourth device, or
- positioning assistance data which is to be used in the expected area.

In some embodiments, the fourth device may be a base station, a LMF, or a server user device (e,g., a server UE). And when the fourth device is the base station, the method 700 may further comprise: transmitting, to an LMF a notification that an RLF of the first device is identified; and transmitting, to the LMF, a request for establishing a relay link for positioning assistance for the first device, the relay link being between the first device and the second device.

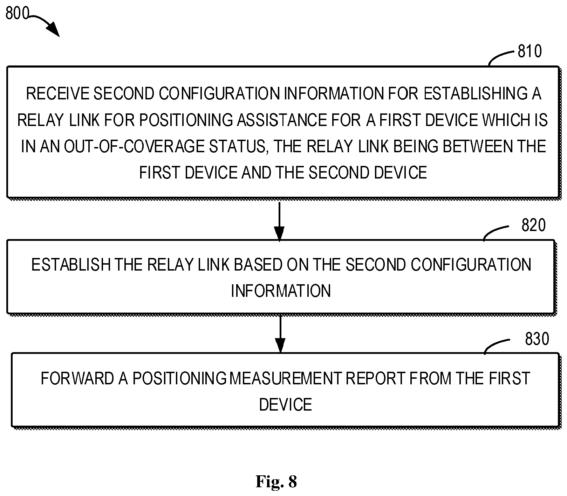

Fig. 8 shows a flowchart of an example method 800 implemented at a second device in accordance with some example embodiments of the present disclosure. For the purpose of discussion, the method 800 will be described from the perspective of the second device 120 with respect to Fig. 1.

At block 810, the second device 120 receives second configuration information for establishing a relay link for positioning assistance for a first device which is in an out-of-coverage status. The relay link is between the first device and the second device.

At block 820, the second device 120 establishes the relay link based on the second configuration information.

At block 830, the second device 120 forwards a positioning measurement report from the first device.

In some embodiments, the method 800 further comprises: receiving, from a first device, a request for establishing the relay link. In such embodiments, establishing the relay link comprises establishing the relay link based on the second configuration information and the request.

In some embodiments, the method 800 further comprises: receiving, from the first device, a request for update of positioning assistance data for the first device; transmitting, to a fourth device, the request for the update of positioning assistance data; receiving, from the fourth device, updated positioning assistance data; and transmitting, to the first device, the updated positioning assistance data.

In some embodiments, the method 800 further comprises: transmitting, to the first device, a notification that the second device is configured for the positioning assistance.

In some embodiments, the second device is in an in-coverage status with respect to the fourth device.

In some example embodiments, a first apparatus capable of performing any of the method 600 (for example, the first device 110) may comprise means for performing the respective operations of the method 600. The means may be implemented in any suitable form. For example, the means may be implemented in a circuitry or software module. The first apparatus may be implemented as or included in the first device 110. In some example embodiments, the means may comprise a processor and a memory.

In some example embodiments, the first apparatus comprises: means for receiving, at a first device from a fourth device, first configuration information for maintaining or establishing a positioning session associated with the first device; and means for performing, based on the first configuration information and with positioning assistance of a second device, positioning of the first device while being in an out-of-coverage status with respect to the fourth device.

In some embodiments, the first apparatus further comprises: means for transmitting, to the second device, a request for establishing a relay link between the first device and the second device for the positioning assistance based on the first configuration information; or means for transmitting, to a third device that is in an in-coverage status with respect to the fourth device, a notification of transmitting the request to the fourth device.

In some embodiments, means for transmitting the request or the notification comprises: means for transmitting the request or the notification based on determining at least one of the following:
- a time duration after a radio link failure, RLF, is declared is above a first time threshold,
- a distance between the first device and the fourth device or a fifth device after the RLF is declared is below a first distance threshold,
- received powers of positioning reference signals are above a first power threshold, or
- the first number of transmission reception points, TRPs, is above a first number threshold.

In some embodiments, the first time threshold is associated with at least one of the following: a T310 timer, a time alignment timer associated with a random access procedure, or a counter of beam failure instance.

In some embodiments, the first configuration information comprises at least one of the following:
- the first time threshold,
- the first distance threshold,
- the first power threshold,
- the first number threshold, or
- positioning assistance data.

In some embodiments, the first apparatus further comprises: means for releasing the second device in accordance with a determination that a time duration during which the positioning session is maintained with the positioning assistance of the second device is above a second time threshold.

In some embodiments, the first configuration information comprises the second time threshold.

In some embodiments, the means for performing the positioning comprises: means for transmitting a positioning measurement report to the fourth device via the second device.

In some embodiments, the means for performing the positioning comprises: means for performing the positioning by utilizing the positioning assistance data based on determining at least one of the following: a time duration during which the positioning assistance data is utilized is below a third time threshold, or a distance between the first device and the second device is below a second distance threshold.

In some embodiments, the first apparatus further comprises: means for determining at least one of the following: the time duration during which the positioning assistance data is utilized is above the third time threshold, or the distance between the first device and the second device is above the second distance threshold; means for transmitting, to the second device, a request for update of the positioning assistance data based on the determination; and means for receiving, from the second device, updated positioning assistance data.

In some embodiments, the positioning assistance data comprises at least one of: configuration related to downlink positioning reference signals, PRS to be transmitted from the fourth device; or configuration related to sidelink PRS to be transmitted from sidelink positioning anchors.

In some embodiments, the configuration related to the sidelink PRS comprises at least one of the following:
- identities of the sidelink positioning anchors,
- a pattern of the sidelink PRS, or
- a resource allocation for the sidelink PRS.

In some embodiments, the means for performing the positioning comprises: means for performing a joint downlink and sidelink positioning based on the configuration related to the downlink PRS and the configuration related to the sidelink PRS; or means for performing a sidelink positioning based on the configuration related to the sidelink PRS.

In some embodiments, the means for performing the joint downlink and sidelink positioning or the means for performing the sidelink positioning is configured to perform the positioning based on determining at least one of the following:
- a time duration after a radio link failure, RLF, is declared is above a fourth time threshold,
- a distance between the first device and the second device after the RLF is declared is above a third distance threshold, or
- the number of transmission reception points, TRPs, is above a number threshold, the TRPs transmitting the downlink PRS.

In some embodiments, establishment of the relay link is triggered by the fourth device. In such embodiments, the first configuration information comprises at least one of the following:
- information about the second device selected by the fourth device,
- information about an expected area of low coverage or out-of-coverage of the fourth device, or
- positioning assistance data which is to be used in the expected area.

In some embodiments, the second device is in an in-coverage status with respect to the fourth device.

In some example embodiments, a second apparatus capable of performing any of the method 800 (for example, the second device 120) may comprise means for performing the respective operations of the method 800. The means may be implemented in any suitable form. For example, the means may be implemented in a circuitry or software module. The second apparatus may be implemented as or included in the second device 120. In some example embodiments, the means may comprise a processor and a memory.

In some example embodiments, the second apparatus comprises: means for receiving, at a second device, second configuration information for establishing a relay link for positioning assistance for a first device which is in an out-of-coverage status, the relay link being between the first device and the second device; means for establishing the relay link based on the second configuration information; and means for forwarding a positioning measurement report from the first device.

In some embodiments, the second apparatus further comprises: means for receiving, from a first device, a request for establishing the relay link. In such embodiments, the means for establishing the relay link comprises means for establishing the relay link based on the second configuration information and the request.

In some embodiments, the second apparatus further comprises: means for receiving, from the first device, a request for update of positioning assistance data for the first device; means for transmitting, to a fourth device, the request for the update of positioning assistance data; means for receiving, from the fourth device, updated positioning assistance data; and means for transmitting, to the first device, the updated positioning assistance data.

In some embodiments, the second apparatus further comprises: means for transmitting, to the first device, a notification that the second device is configured for the positioning assistance.

In some embodiments, the second device is in an in-coverage status with respect to the fourth device.

In some example embodiments, a third apparatus capable of performing any of the method 700 (for example, the fourth device 140) may comprise means for performing the respective operations of the method 700. The means may be implemented in any suitable form. For example, the means may be implemented in a circuitry or software module. The second apparatus may be implemented as or included in the fourth device 140. In some example embodiments, the means may comprise a processor and a memory.

In some example embodiments, the third apparatus comprises: means for transmitting, from a fourth device to a first device, first configuration information for maintaining or establishing a positioning session associated with the first device which is in an out-of-coverage status with respect to the fourth device; and means for receiving, from the first device via a second device, a positioning measurement report associated with the first device.

In some embodiments, the third apparatus further comprises: means for transmitting, to the second device, second configuration information for establishing a relay link between the first device and the second device for positioning assistance for the first device which is in an out-of-coverage status with respect to the fourth device.

In some embodiments, the means for transmitting the second configuration information for establishing the relay link comprises means for transmitting the second configuration information based on determining: the first device experiences an unexpected coverage interruption, or the first device experiences an expected coverage interruption.

In some embodiments, the third apparatus further comprises: means for receiving, from a third device which is in an in-coverage status with respect to the fourth device, a request for establishing the relay link for the positioning assistance. In some embodiments, the means for transmitting the second configuration information comprises means for transmitting the second configuration information for establishing the relay link based on the request.

In some embodiments, the first configuration information comprises at least one of the following:
- positioning assistance data,
- at least one threshold for triggering a request for establishing a relay link from the first device, the relay link being between the first device and the second device for positioning assistance for the first device which is in an out-of-coverage status with respect to the fourth device,
- a second time threshold for releasing the relay link, or
- at least one threshold until which the positioning assistance data is utilized by the first device.

In some embodiments, the third apparatus further comprises: means for receiving, from the second device, a request for update of the positioning assistance data; and means for transmitting, to the second device, updated positioning assistance data based on the request.

In some embodiments, the positioning assistance data comprises: configuration related to downlink PRS to be transmitted from the fourth device; and configuration related to sidelink PRS to be transmitted from sidelink positioning anchors.

In some embodiments, the configuration related to the sidelink PRS comprises at least one of the following:
- identities of the sidelink positioning anchors,
- a pattern of the sidelink PRS, or
- a resource allocation for the sidelink PRS.

In some embodiments, establishment of the relay link is triggered by the fourth device. In such embodiments, the first configuration information comprises at least one of the following:
- information about the second device selected by the fourth device,
- information about an expected area of low coverage or out-of-coverage of the fourth device, or
- positioning assistance data which is to be used in the expected area.

In some embodiments, the fourth device comprises a base station, and the third apparatus further comprises: means for transmitting, to an LMF a notification that an RLF of the first device is identified; and means for transmitting, to the LMF, a request for establishing a relay link for positioning assistance for the first device, the relay link being between the first device and the second device.

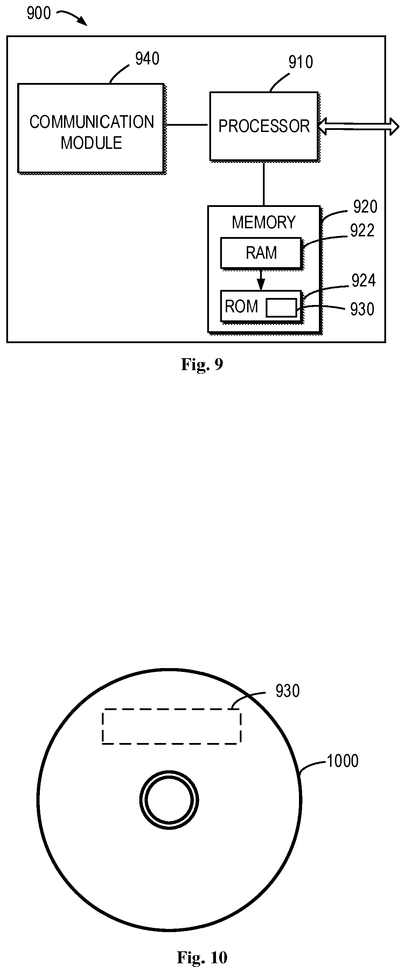

Fig. 9 is a simplified block diagram of a device 900 that is suitable for implementing example embodiments of the present disclosure. The device 900 may be provided to implement a communication device, for example, the first device 110, the second device 120, the third device 130 or the fourth device 140 as shown in Fig. 1. As shown, the device 900 includes one or more processors 910, one or more memories 920 coupled to the processor 910, and one or more communication modules 940 coupled to the processor 910.

The communication module 940 is for bidirectional communications. The communication module 940 has one or more communication interfaces to facilitate communication with one or more other modules or devices. The communication interfaces may represent any interface that is necessary for communication with other network elements. In some example embodiments, the communication module 940 may include at least one antenna.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 922 and other volatile memories that will not last in the power-down duration.

A computer program 930 includes computer executable instructions that could be executed by the associated processor 910. The program 930 may be stored in the memory, e.g., ROM 924. The processor 910 may perform any suitable actions and processing by loading the program 930 into the RAM 922.

The example embodiments of the present disclosure may be implemented by means of the program 930 so that the device 900 may perform any process of the disclosure as discussed with reference to Figs. 1 to 8. The example embodiments of the present disclosure may also be implemented by hardware or by a combination of software and hardware.

In some example embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. The computer readable medium may include any types of tangible non-volatile storage, such as ROM, EPROM, a flash memory, a hard disk, CD, DVD, and the like. Fig. 10 shows an example of the computer readable medium 1000 which may be in form of CD, DVD or other optical storage disk. The computer readable medium has the program 930 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target physical or virtual processor, to carry out any of the methods as described above with reference to Figs. 1 to 8. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

It should be appreciated that though some embodiments may be implemented by/at IAB nodes, solutions including methods and apparatus proposed in this disclosure could also be applied in other communication systems where similar technical problems exist. Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous.

Although the present disclosure has been described in languages specific to structural features and/or methodological acts, it is to be understood that the the appended claims are not necessarily limited to the specific features or acts described above.

## Claims

1. A first terminal device (110), comprising:
at least one processor; and
at least one memory storing instructions that, when executed by the at least one processor, cause the first terminal device (110) at least to:
receive, from a base station (140), first configuration information (210) for maintaining or establishing a positioning session associated with the first terminal device (110), wherein the first configuration information (210) is received when the first terminal device (110) is in an in-coverage status with respect to the base station (140);
transmit, to a second terminal device (120), a request for establishing a relay link (230) between the first terminal device (110) and the second terminal device (120) for positioning assistance based on the first configuration information (210);
perform, based on the first configuration information (210) and with the positioning assistance of the second terminal device (120), positioning of the first terminal device (110) while being in an out-of-coverage status with respect to the base station (140); and
transmit a positioning measurement report to the base station via the second terminal device.

2. The first terminal device (110) of claim 1, wherein the first terminal device is caused to transmit the request or the notification based on determining at least one of the following:
a time duration after a radio link failure, RLF, is declared is above a first time threshold,
a distance between the first terminal device and the fourth device or a fifth device after the RLF is declared is below a first distance threshold,
received powers of positioning reference signals are above a first power threshold, or
the first number of transmission reception points, TRPs, is above a first number threshold.

3. The first terminal device (110) of claim 2, wherein the first time threshold is associated with at least one of the following:
a T310 timer,
a time alignment timer associated with a random access procedure, or
a counter of beam failure instance.

4. The first terminal device (110) of claim 1, wherein the first terminal device is further caused to:
determine whether the first device is in an out-of-coverage status.

5. A base station (140), comprising:
at least one processor; and
at least one memory storing instructions that, when executed by the at least one processor, cause the base station at least to:
transmit, to a first terminal device (110), first configuration information (210) for maintaining or establishing a positioning session associated with the first terminal device (110) which is to be in an out-of-coverage status with respect to the base station (140), wherein the first configuration information (210) is transmitted when the first terminal device (110) is in an in-coverage status with respect to the base station (140);
transmit, to a second terminal device, a second configuration information for establishing a relay link between the first terminal device and the second terminal device for positioning assistance for the first terminal device which is in the out-of-coverage status with respect to the base station; and
receive, from the first terminal device (110) via the second terminal device (120), a positioning measurement report associated with the first terminal device.

6. A method performed by a first terminal device (110), the method comprising:
receiving, at the first terminal device (110) from a base station (140), first configuration information (210) for maintaining or establishing a positioning session associated with the first terminal device (110), wherein the first configuration information (210) is received when the first terminal device (110) is in an in-coverage status with respect to the base station (140);
transmitting, to a second terminal device (120), a request for establishing a relay link between the first terminal device (110) and the second terminal device (120) for positioning assistance based on the first configuration information (210);
performing, based on the first configuration information (210) and with the positioning assistance of the second terminal device (120), positioning of the first terminal device (110) while being in an out-of-coverage status with respect to the base station (140);
transmitting a positioning measurement report to the base station via the second terminal device.

7. The method of claim 6, wherein the request or the notification is transmitted based on determining at least one of the following:
a time duration after a radio link failure, RLF, is declared is above a first time threshold,
a distance between the first terminal device and the fourth device or a fifth device after the RLF is declared is below a first distance threshold,
received powers of positioning reference signals are above a first power threshold, or
the first number of transmission reception points, TRPs, is above a first number threshold.

8. The method of claim 6, further comprising:
determining whether the first device (110) is in an out-of-coverage status.

9. A method performed by a base station (140), the method comprising:
transmitting, to a first terminal device (110), first configuration information (210) for maintaining or establishing a positioning session associated with the first terminal device (110) which is to be in an out-of-coverage status with respect to the base station (140), wherein the first configuration information (210) is transmitted when the first terminal device (110) is in an in-coverage status with respect to the base station (140);
transmitting, to the second terminal device (110), second configuration information (250) for establishing a relay link between the first terminal device (110) and the second terminal device (120) for positioning assistance for the first terminal device (110) which is in an out-of-coverage status with respect to the base station (140);and
receiving, from the first terminal device (110) via a second terminal device (120), a positioning measurement report associated with the first terminal device (110).

10. A computer program including instructions to cause an apparatus to perform the methods of any one of claims 6 to 9.

11. A non-transitory computer readable medium comprising the computer program of claim 10.

## Patentansprüche

1. Ein erstes Endgerät (110), umfassend:
mindestens einen Prozessor; und
mindestens einen Speicher, der Anweisungen speichert, die, wenn sie durch den mindestens einen Prozessor ausgeführt werden, das erste Endgerät (110) veranlassen, mindestens:
von einer Basisstation (140) erste Konfigurationsinformationen (210) zum Aufrechterhalten oder Aufbauen einer Positionierungssitzung zu empfangen, die dem ersten Endgerät (110) zugeordnet ist, wobei die ersten Konfigurationsinformationen (210) empfangen werden, wenn das erste Endgerät (110) bezüglich der Basisstation (140) einen Versorgungszustand aufweist;
an ein zweites Endgerät (120) eine Anforderung zum Aufbauen einer Relaisverbindung (230) zwischen dem ersten Endgerät (110) und dem zweiten Endgerät (120) für Positionierungsunterstützung auf der Grundlage der ersten Konfigurationsinformationen (210) zu übermitteln;
auf der Grundlage der ersten Konfigurationsinformationen (210) und mit der Positionierungsunterstützung des zweiten Endgeräts (120) eine Positionierung des ersten Endgeräts (110) durchzuführen, während es sich bezüglich der Basisstation (140) in einem Nicht-Versorgungszustand befindet; und
einen Positionierungsmessbericht an die Basisstation über das zweite Endgerät zu übermitteln.

2. Erstes Endgerät (110) nach Anspruch 1, wobei das erste Endgerät veranlasst wird, die Anforderung oder die Benachrichtigung auf der Grundlage der Feststellung mindestens eines der folgenden Elemente zu übermitteln:
eine Zeitdauer nach der Erklärung eines Funkverbindungsausfalls, RLF, ist größer als ein erster Zeitschwellenwert,
ein Abstand zwischen dem ersten Endgerät und dem vierten Gerät oder einem fünften Gerät nach der Erklärung des RLF ist kleiner als ein erster Entfernungsschwellenwert,
empfangene Leistungen von Positionierungsreferenzsignalen sind größer als ein erster Leistungsschwellenwert, oder
die erste Anzahl von Sende-Empfangs-Punkten, TRPs, ist größer als ein erster Zahlenschwellenwert.

3. Erstes Endgerät (110) nach Anspruch 2, wobei der erste Zeitschwellenwert mit mindestens einem der folgenden Elemente assoziiert ist:
einem T310-Timer,
einem Zeitausrichtungs-Timer, der einem Direktzugriffsverfahren zugeordnet ist, oder
einem Zähler für Strahlausfallinstanzen.

4. Erstes Endgerät (110) nach Anspruch 1, wobei das erste Endgerät ferner veranlasst wird:
zu bestimmen, ob das erste Gerät sich in einem Nicht-Versorgungszustand befindet.

5. Eine Basisstation (140), umfassend:
mindestens einen Prozessor; und
mindestens einen Speicher, der Anweisungen speichert, die, wenn sie durch den mindestens einen Prozessor ausgeführt werden, die Basisstation veranlassen, mindestens:
an ein erstes Endgerät (110) erste Konfigurationsinformationen (210) zum Aufrechterhalten oder Aufbauen einer Positionierungssitzung zu übermitteln, die dem ersten Endgerät (110) zugeordnet ist, das sich bezüglich der Basisstation (140) in einem Nicht-Versorgungszustand befinden soll, wobei die ersten Konfigurationsinformationen (210) übermittelt werden, wenn das erste Endgerät (110) bezüglich der Basisstation (140) einen Versorgungszustand aufweist;
an ein zweites Endgerät zweite Konfigurationsinformationen zum Aufbauen einer Relaisverbindung zwischen dem ersten Endgerät und dem zweiten Endgerät für Positionierungsunterstützung für das erste Endgerät zu übermitteln, das sich bezüglich der Basisstation in dem Nicht-Versorgungszustand befindet; und
von dem ersten Endgerät (110) über das zweite Endgerät (120) einen Positionierungsmessbericht zu empfangen, der dem ersten Endgerät zugeordnet ist.

6. Ein von einem ersten Endgerät (110) durchgeführtes Verfahren, wobei das Verfahren umfasst:
Empfangen, an dem ersten Endgerät (110) von einer Basisstation (140), von ersten Konfigurationsinformationen (210) zum Aufrechterhalten oder Aufbauen einer Positionierungssitzung, die dem ersten Endgerät (110) zugeordnet ist, wobei die ersten Konfigurationsinformationen (210) empfangen werden, wenn das erste Endgerät (110) bezüglich der Basisstation (140) einen Versorgungszustand aufweist;
Übermitteln, an ein zweites Endgerät (120), einer Anforderung zum Aufbauen einer Relaisverbindung zwischen dem ersten Endgerät (110) und dem zweiten Endgerät (120) für Positionierungsunterstützung auf der Grundlage der ersten Konfigurationsinformationen (210);
Durchführen, auf der Grundlage der ersten Konfigurationsinformationen (210) und mit der Positionierungsunterstützung des zweiten Endgeräts (120), einer Positionierung des ersten Endgeräts (110), während es sich bezüglich der Basisstation (140) in einem Nicht-Versorgungszustand befindet;
Übermitteln eines Positionierungsmessberichts an die Basisstation über das zweite Endgerät.

7. Verfahren nach Anspruch 6, wobei die Anforderung oder die Benachrichtigung auf der Grundlage der Feststellung mindestens eines der folgenden Elemente übermittelt wird:
eine Zeitdauer nach der Erklärung eines Funkverbindungsausfalls, RLF, ist größer als ein erster Zeitschwellenwert,
ein Abstand zwischen dem ersten Endgerät und dem vierten Gerät oder einem fünften Gerät nach der Erklärung des RLF ist kleiner als ein erster Entfernungsschwellenwert,
empfangene Leistungen von Positionierungsreferenzsignalen sind größer als ein erster Leistungsschwellenwert, oder
die erste Anzahl von Sende-Empfangs-Punkten, TRPs, ist größer als einem ersten Zahlenschwellenwert.

8. Verfahren nach Anspruch 6, ferner umfassend:
Bestimmen, ob das erste Gerät (110) sich in einem Nicht-Versorgungszustand befindet.

9. Ein von einer Basisstation (140) durchgeführtes Verfahren, wobei das Verfahren umfasst:
Übermitteln, an ein erstes Endgerät (110), von ersten Konfigurationsinformationen (210) zum Aufrechterhalten oder Aufbauen einer Positionierungssitzung, die dem ersten Endgerät (110) zugeordnet ist, das sich bezüglich der Basisstation (140) in einem Nicht-Versorgungszustand befinden soll, wobei die ersten Konfigurationsinformationen (210) übermittelt werden, wenn das erste Endgerät (110) bezüglich der Basisstation (140) einen Versorgungszustand aufweist;
Übermitteln, an das zweite Endgerät (110), von zweiten Konfigurationsinformationen (250) zum Aufbauen einer Relaisverbindung zwischen dem ersten Endgerät (110) und dem zweiten Endgerät (120) für Positionierungsunterstützung für das erste Endgerät (110), das sich bezüglich der Basisstation (140) in einem Nicht-Versorgungszustand befindet; und
Empfangen, von dem ersten Endgerät (110) über ein zweites Endgerät (120), eines Positionierungsmessberichts, der dem ersten Endgerät (110) zugeordnet ist.

10. Ein Computerprogramm, das Anweisungen umfasst, um einen Apparat zu veranlassen, die Verfahren nach einem der Ansprüche 6 bis 9 durchzuführen.

11. Ein nichtflüchtiges, computerlesbares Medium, das das Computerprogramm nach Anspruch 10 umfasst.

## Revendications

1. Un premier dispositif terminal (110), comprenant :
au moins un processeur ; et
au moins une mémoire stockant des instructions qui, lorsqu'elles sont exécutées par l'au moins un processeur, amènent le premier dispositif terminal (110) au moins à :
recevoir, d'une station de base (140), des premières informations de configuration (210) pour maintenir ou établir une session de positionnement associée au premier dispositif terminal (110), dans lequel les premières informations de configuration (210) sont reçues lorsque le premier dispositif terminal (110) est dans un état de couverture par rapport à la station de base (140) ;
transmettre, à un second dispositif terminal (120), une requête d'établissement d'un lien de relais (230) entre le premier dispositif terminal (110) et le second dispositif terminal (120) pour une assistance au positionnement sur la base des premières informations de configuration (210) ;
effectuer, sur la base des premières informations de configuration (210) et avec l'assistance au positionnement du second dispositif terminal (120), un positionnement du premier dispositif terminal (110) tout en étant dans un état hors couverture par rapport à la station de base (140) ; et
transmettre un rapport de mesure de positionnement à la station de base via le second dispositif terminal.

2. Le premier dispositif terminal (110) selon la revendication 1, dans lequel le premier dispositif terminal est amené à transmettre la requête ou la notification sur la base de la détermination d'au moins l'un des éléments suivants :
une durée après qu'une défaillance de lien radio, RLF, est déclarée est supérieure à un premier seuil de temps,
une distance entre le premier dispositif terminal et le quatrième dispositif ou un cinquième dispositif après que la RLF est déclarée est inférieure à un premier seuil de distance,
des puissances reçues de signaux de référence de positionnement sont supérieures à un premier seuil de puissance, ou
le premier nombre de points de réception de transmission, TRP, est supérieur à un premier seuil de nombre.

3. Le premier dispositif terminal (110) selon la revendication 2, dans lequel le premier seuil de temps est associé à au moins l'un des éléments suivants :
une minuterie T310,
une minuterie d'alignement temporel associée à une procédure d'accès aléatoire, ou
un compteur d'instances de défaillance de faisceau.

4. Le premier dispositif terminal (110) selon la revendication 1, dans lequel le premier dispositif terminal est en outre amené à :
déterminer si le premier dispositif est dans un état hors couverture.

5. Une station de base (140), comprenant :
au moins un processeur ; et
au moins une mémoire stockant des instructions qui, lorsqu'elles sont exécutées par l'au moins un processeur, amènent la station de base au moins à :
transmettre, à un premier dispositif terminal (110), des premières informations de configuration (210) pour maintenir ou établir une session de positionnement associée au premier dispositif terminal (110) qui doit être dans un état hors couverture par rapport à la station de base (140), dans lequel les premières informations de configuration (210) sont transmises lorsque le premier dispositif terminal (110) est dans un état de couverture par rapport à la station de base (140) ;
transmettre, à un second dispositif terminal, des secondes informations de configuration pour établir un lien de relais entre le premier dispositif terminal et le second dispositif terminal pour une assistance au positionnement pour le premier dispositif terminal qui est dans l'état hors couverture par rapport à la station de base ; et
recevoir, du premier dispositif terminal (110) via le second dispositif terminal (120), un rapport de mesure de positionnement associé au premier dispositif terminal.

6. Un procédé exécuté par un premier dispositif terminal (110), le procédé comprenant :
la réception, au premier dispositif terminal (110) depuis une station de base (140), de premières informations de configuration (210) pour maintenir ou établir une session de positionnement associée au premier dispositif terminal (110), dans lequel les premières informations de configuration (210) sont reçues lorsque le premier dispositif terminal (110) est dans un état de couverture par rapport à la station de base (140) ;
la transmission, à un second dispositif terminal (120), d'une requête d'établissement d'un lien de relais entre le premier dispositif terminal (110) et le second dispositif terminal (120) pour une assistance au positionnement sur la base des premières informations de configuration (210) ;
l'exécution, sur la base des premières informations de configuration (210) et avec l'assistance au positionnement du second dispositif terminal (120), d'un positionnement du premier dispositif terminal (110) tout en étant dans un état hors couverture par rapport à la station de base (140) ;
la transmission d'un rapport de mesure de positionnement à la station de base via le second dispositif terminal.

7. Le procédé selon la revendication 6, dans lequel la requête ou la notification est transmise sur la base de la détermination d'au moins l'un des éléments suivants :
une durée après qu'une défaillance de lien radio, RLF, est déclarée est supérieure à un premier seuil de temps,
une distance entre le premier dispositif terminal et le quatrième dispositif ou un cinquième dispositif après que la RLF est déclarée est inférieure à un premier seuil de distance,
des puissances reçues de signaux de référence de positionnement sont supérieures à un premier seuil de puissance, ou
le premier nombre de points de réception de transmission, TRP, est supérieur à un premier seuil de nombre.

8. Le procédé selon la revendication 6, comprenant en outre :
la détermination si le premier dispositif (110) est dans un état hors couverture.

9. Un procédé exécuté par une station de base (140), le procédé comprenant :
la transmission, à un premier dispositif terminal (110), de premières informations de configuration (210) pour maintenir ou établir une session de positionnement associée au premier dispositif terminal (110) qui doit être dans un état hors couverture par rapport à la station de base (140), dans lequel les premières informations de configuration (210) sont transmises lorsque le premier dispositif terminal (110) est dans un état de couverture par rapport à la station de base (140) ;
la transmission, au second dispositif terminal (110), des secondes informations de configuration (250) pour établir un lien de relais entre le premier dispositif terminal (110) et le second dispositif terminal (120) pour une assistance au positionnement pour le premier dispositif terminal (110) qui est dans un état hors couverture par rapport à la station de base (140) ; et
la réception, du premier dispositif terminal (110) via un second dispositif terminal (120), d'un rapport de mesure de positionnement associé au premier dispositif terminal (110).

10. Un programme d'ordinateur comprenant des instructions pour amener un appareil à exécuter les procédés selon l'une quelconque des revendications 6 à 9.

11. Un support lisible par ordinateur non transitoire comprenant le programme d'ordinateur selon la revendication 10.
